# EUROPÄISCHE PATENTANMELDUNG

(11) **EP 0 761 292 A1**
(43) Veröffentlichungstag der Anmeldung: **12.03.1997**
(21) Anmeldenummer: 96109643.5
(22) Anmeldetag: 15.06.1996
(51) Int. Cl.: B01D 69/10, B01D 69/08

(54) **Kapillarmembran**

(30) Priorität: 24.08.1995 DE 19531099
(71) Anmelder: REHAU AG + Co, 95111 Rehau (DE)
(72) Erfinder: Hopperdietzel, S., Dr.Dipl.-Chem., 95111 Rehau (DE); Müller, Margit, Chem.Ing., 95111 Rehau (DE); Heinrich, Klaus-Dieter, 95111 Rehau (DE); Weinberg, E., Dr.Dipl.-Chem., 95111 Rehau (DE); Poersch, Franz, Dr.Dipl.-Chem., 95111 Rehau (DE)

(57) **Zusammenfassung**

Die Erfindung betrifft eine selbsttragende Kapillarmembran für den Einsatz bei höherem Druck mit innenliegender Trennschicht. Diese Kapillarmembran ist mit einem nahtlosen Außenmantel versehen, welcher als geschlossene, flüssigkeitsdurchlässige Diagonalarmierung ausgeführt ist.

## Beschreibung

Die Erfindung betrifft eine selbsttragende Kapillarmembran mit innenliegender Trennschicht für den Einsatz bei höherem Druck.

Im Unterschied zu anderen, gebräuchlichen Membranformen wie z.B. Flach- und Rohrmembranen sind Kapillarmembranen selbsttragend, d.h. die mechanische Stabilität bzw. die Druckstabilität der Kapillarmembranen ist abhängig von der Art des eingesetzten Polymers, der Porosität und insbesondere der Dimensionen der Kapillaren. Die bisher für die Trennung bei erhöhtem Druck, z.B. in der Umkehrosmose, eingesetzten Kapillar- oder Hohlfasermembranen werden üblicherweise von außen mit Druck beaufschlagt, da die Kapillaren bei radial nach innen gerichteten Kräften einem höheren Druck widerstehen, als im umgekehrten Fall bei radial nach außen wirkenden Kräften.

Die Verfahrensführung, bei der die Abtrennung der Rohwasserinhaltsstoffe an der Außenseite der Kapillaren stattfindet, hat aber wegen vorhandener Totzonen und ungünstiger Strömungsführungen große Nachteile, so daß es zu Verstopfungen der Kapillaren kommen kann.

Bei den von innen durchströmten Kapillarmembranen treten diese Nachteile nicht auf. Bisher wird ihr Einsatz aber aufgrund der geringen Druckfestigkeit bei Trennverfahren, die einen höheren Arbeitsdruck erfordern, z.B. bei der Umkehrosmose, stark eingeschränkt.

Im Vergleich dazu werden Rohr- oder Schlauchmembranen, die ebenfalls von innen durchströmt sind und bei höheren Drücken eingesetzt werden können, durch nachträgliche Beschichtung einer vorgeformten, schlauchförmigen Trägerschicht hergestellt. Durch die diskontinuierliche Herstellung ist das Verfahren sehr aufwendig und insbesondere bei kleineren Durchmessern kostenintensiv. Ein weiterer Nachteil dieser Membranen ist es, daß die Trägerschicht nicht nahtlos aufgebracht werden kann.

Dies kann dazu führen, daß es insbesondere bei erhöhtem Druck zu Defekten in der Membran kommt. Bei Flach-, Schlauch-, oder Rohrmembranen ist außerdem die Trennschicht fest mit der Trägerschicht verbunden. Dadurch bedingt werden an die Trägerschicht ganz bestimmte Anforderungen wie z.B. gute Haftung, glatte Oberfläche, Abstimmung zwischen Viskosität der Gießlösung und Luftdurchlässigkeit der Trägerschicht gestellt, die eine Einschränkung der Materialauswahl zur Herstellung dieser Membranen zur Folge haben.

Die Erfindung hat sich deshalb die Aufgabe gestellt, die genannten Nachteile des Standes der Technik zu vermeiden und eine Kapillarmembran für den Einsatz bei höheren Drücken anzugeben, die in einem kontinuierlichen Arbeitsgang hergestellt werden kann. Erfindungsgemäß wird dazu vorgeschlagen, daß die Kapillarmembran mit einem nahtlosen Außenmantel versehen ist, welcher als geschlossene, jedoch flüssigkeitsdurchlässige Diagonalarmierung ausgeführt ist. Der durch die erfindungsgemäße Diagonalarmierung aufgebrachte Außenmantel erhöht den Berstdruck der Kapillaren um ein Vielfaches, z.B. von 10 auf 80 bar.

Die Diagonalarmierung hierfür besteht vorteilhaft aus Einzelfäden, die ihrerseits entweder aus Monofilen oder aus Multifilen bestehen. Die Materialauswahl für diese Monofile oder Multifile ist nahezu unbeschränkt möglich und es finden z.B. Polyestergarne, Polyaramide, andere Polymerfasern, Glasfasern oder auch Metallfäden Verwendung. Die Einzelfäden der Diagonalarmierung werden in einer Geflechtsbindung 1:1 bis 2:1 oder auch 2:2 in einem kontinuierlichen Verfahren als nahtloser Außenmantel auf die Kapillaren aufgebracht. Je nach Wanddicke der Monofile oder Multifile werden dabei Kapillaren mit Außendurchmessern von 0,5 mm bis 15 mm hergestellt. Dabei müssen die Kapillaren selbst eine mechanische Stabilität aufweisen, die der Fadenspannung beim Armierungsvorgang widersteht.

Die Einzelfäden der Monofile oder Multifile werden vorteilhaft in einem Umschlingungswinkel tg a größer 50°, vorzugsweise größer 55° bis 58° aufgebracht. Ein Umschlingungswinkel größer 54° hat zur Folge, daß sich die Armierung unter Druckbelastung von innen in Längsrichtung dehnt. Bei Umschlingungswinkeln kleiner 54° würde sich im umgekehrten Fall die Armierung bei Druckbelastung zusammenziehen. Da erfindungsgemäß die Kapillarmembran und die Armierung nicht fest miteinander verbunden sind, vielmehr sich die Armierung in Längsrichtung auf der Kapillarmembran verschieben läßt, hätte ein Zusammenziehen der Armierung einen Abriß der Kapillarmembran in einem Modul und damit die Zerstörung der Membranwirkung zur Folge.

Die einzelnen Kapillarmembranen können sowohl direkt im Anschluß an das Phaseninversionsverfahren im noch feuchten Zustand als auch nachträglich in einem abgetrennten Verfahrensschritt in getrocknetem Zustand armiert werden. Voraussetzung ist im beiden Fällen die mechanische Stabilität der Kapillaren gegen die Fadenspannung beim Armierungsvorgang.

Für die erfindungsgemäßen Kapillarmembranen können unterschiedliche Polymere wie z.B. Polyethersulfon (PES), Polysulfon (PSU), Polyacrylnitril (PAN), Polyvinylidenfluorid (PVDF) usw. eingesetzt werden.

Die erfindungsgemäß armierten Kapillarmembranen können auf herkömmliche Art mittels eines Harzes zu einem Modul vergossen werden. Beim Eingießvorgang selbst ist allerdings darauf zu achten, daß die Umflechtung am Anströmquerschnitt der Kapillaren durch das Harz abgedichtet wird. Die Modullänge kann hierbei beliebig gewählt werden.

Darüberhinaus können die erfindungsgemäß mit dem nahtlosen Außenmantel versehenen Kapillarmembranen zusätzlich innen beschichtet oder anderweitig behandelt werden. Derartige Zusatzbeschichtungen können bei speziellen Einsatzgebieten solcher Kapillaren nützlich sein.

Die erfindungsgemäßen Kapillarmembranen werden anhand nachstehender Beispiele im einzelnen erläutert:

### Beispiel 1

Nach dem Phaseninversionsverfahren werden Kapillarmembranen aus Polyethersulfon mit folgenden Eigenschaften hergestellt:

| | |
|---|---|
| Innendurchmesser: | 1,90 mm |
| Wandstärke: | 0,60 mm |
| MWCO: | 10.000 Dalton |
| Berstdruck: | 10 bar |

Die glyzerinisierten und getrockneten Kapillaren werden auf einer 16-fädigen Flechtmaschine mit einem Polyester-Filamentgarn (dtex 550 TO) mit einer Reißfestigkeit von 34,5 N bei einer Fadenspannung von 25 g umflochten. Die umflochtenen Kapillaren werden zu Testmodulen vergossen und auf Wasserfluß und Berstdruck getestet.

### Ergebnis:

| | |
|---|---|
| Wasserfluß (35 bar): | 630 Ltr./hm² |
| Berstdruck: | 90 bar |

### Beispiel 2

Eine nach Beispiel 1 hergestellte Kapillarmembran wird mit einem Composite-Auftrag beschichtet und auf ihren NaCl-Rückhalt getestet.

### Beschichtung:

12 g PEI (50%ig) in 600 ml H₂O lösen und mit 100 ml teilvers.Cyanurchlorid mischen. Die Beschichtungslösung wird 10 Min. im Kreislauf durch die Kapillaren gepumpt. Anschließend wird die Membran über Nacht im Umlufttrockenschrank bei 45° C getrocknet.

### Ergebnis:

| | |
|---|---|
| In ACL-Fluß (30 bar): | 36,5 Ltr/hm² |
| NACL-Rückhalt (30 bar) | 86,3% |
| Berstdruck | 92 bar |

### Beispiel 3

Die Herstellung der erfindungsgemäßen Membranen ist in Anlehnung an Beispiel 1 folgendermaßen möglich:

Es werden nach dem Phaseninversionsverfahren Kapillarmembranen aus Polyethersulfon hergestellt, nach dem letzten Spülbad jedoch nicht getrocknet und glycerinisiert, sondern sofort mit einer Flechtmaschine (wie vorher beschrieben) in der Strecken umflochten.

Zum Einsatz kommen Polyester-Filamentgarne d tex 550 TO mit einer Reißfestigkeit von 34,5 N und einer Fadenspannung von 10 g.

Die so hergestellten und umflochtenen Kapillaren werden nach dem Ablängen glyzerinisiert und getrocknet.

Die Testmodule weisen folgende Ergebnisse auf:

| | |
|---|---|
| Wasserfluß (35 bar): | 500 l / hm² |
| Berstdruck: | 90 bar |

## Patentansprüche

1. Selbsttragende Kapillarmembran für den Einsatz bei höherem Druck mit innenliegender Trennschicht, dadurch gekennzeichnet, daß die Kapillarmembran mit einem nahtlosen Außenmantel versehen ist und der nahtlose Außenmantel als geschlossene, flüssigkeitsdurchlässige Diagonalarmierung ausgeführt ist.

2. Kapillarmembran nach Anspruch 1, dadurch gekennzeichnet, daß die Diagnalarmierung aus Einzelfäden in Geflechtsbindung 1:1 bis 2:2 besteht.

3. Kapillarmembran nach Anspruch 1, dadurch gekennzeichnet, daß die Einzelfäden in einem Umschlingungswinkel tg a größer 55° aufgebracht sind.

4. Kapillarmembran nach Anspruch 1, dadurch gekennzeichnet, daß die Diagonalarmierung aus wenigstens 8 und höchstens 24 Einzelfäden besteht.

5. Kapillarmembran nach Ansprüchen 1 und 4, dadurch gekennzeichnet, daß die Einzelfäden aus organischen oder anorganischen Fasern oder aus Metallfäden bestehen.

6. Kapillarmembran nach Ansprüchen 1, 4 und 5, dadurch gekennzeichnet, daß die Einzelfäden Multifile oder Monofile sind.

7. Kapillarmembran nach Anspruch 1, dadurch gekennzeichnet, daß mehrere mit dem nahtlosen Außenmantel versehene Kapillaren mittels eines Harzes zu einem Modul vergossen sind.

8. Kapillarmembran nach Anspruch 1, gekennzeichnet durch eine zusätzliche innere Beschichtung.
